# EUROPÄISCHE PATENTSCHRIFT

(11) **EP 2 100 694 B1**
(45) Veröffentlichungstag und Bekanntmachung des Hinweises auf die Patenterteilung: **19.09.2012**
(21) Anmeldenummer: 08158691.9
(22) Anmeldetag: 20.06.2008
(51) Int. Cl.: B23Q 1/01

(54) **Verfahren zur Herstellung einer Bearbeitungsmaschine mit einem Betonteil**
Method for producing a processing machine with a part made of concrete
Procédé de fabrication d'une machine d'usinage avec une partie en béton

(30) Priorität: 12.03.2008 EP 08004574; 12.03.2008 EP 08004575
(43) Veröffentlichungstag der Anmeldung: 16.09.2009
(73) Patentinhaber: Bütfering Schleiftechnik GmbH, 59269 Beckum (DE); Homag Holzbearbeitungssysteme AG, 72296 Schopfloch (DE)
(72) Erfinder: Settele, Martin, 59227 Ahlen (DE); Humpe. Hans-Bernd, 59269 Beckum (DE)
(74) Vertreter: HOFFMANN EITLE

(56) Entgegenhaltungen:
- EP-A- 0 194 173
- AT-B- 355 976
- CH-A5- 584 169
- DE-A1- 19 752 243
- DE-A1-102005 025 468
- DE-B3-102005 052 817
- GB-A- 2 071 635

## Beschreibung

### Technisches Gebiet

Die Erfindung betrifft ein Verfahren zum Herstellen einer Bearbeitungsmaschine zum Bearbeiten von Werkstücken, die bevorzugt zumindest teilweise aus Holz, Holzwerkstoffen, Kunststoff, Metall oder dergleichen bestehen, mindestens einem tragenden Maschinenteil und mindestens einer mit dem tragenden Maschinenteil verbundenen Bearbeitungseinheit, wobei das tragende Maschinenteil zumindest abschnittsweise aus Beton besteht. Dabei wird im Rahmen der vorliegenden Erfindung unter Beton ein mineralisch gebundener, insbesondere auch zementgebundener Beton verstanden.

### Stand der Technik

Bearbeitungsmaschinen der eingangs genannten Art werden bei der Bearbeitung und Herstellung von Werkstücken in der Möbel-und Bauelementeindustrie und vielfältigen anderen Industriezweigen verbreitet eingesetzt. Die Bearbeitungseinheiten dieser Maschinen sind üblicherweise an tragenden Maschinenteilen aufgebaut, das traditionell aus Stahl bzw. Stahlblech hergestellt wird. Die zunehmenden Bearbeitungsgeschwindigkeiten und hiermit verbundenen dynamischen Kräfte der Bearbeitungsmaschinen führen dazu, dass das Schwingungsverhalten der tragenden Maschinenteile kontinuierlich an Bedeutung gewinnt.

Vor diesem Hintergrund wurde vorgeschlagen, ein Maschinenbett als ein wesentliches tragendes Maschinenteil aus Mineralguss herzustellen, d.h. einem Gemisch aus einem synthetischen Bindemittel und Zuschlagstoffen (vgl. beispielsweise DE 20 2006 019 323 U1). Die hierfür benötigten synthetischen Bindemittel sind jedoch aufwändig zu verarbeiten und mit hohen Kosten verbunden.

Als Alternative hierzu kamen zuletzt auch Maschinenbetten zum Einsatz, die ganz oder teilweise aus Beton bestehen. So offenbart beispielsweise die DE 37 34 895 A1 ein Betongestell für Innenrundschleifmaschinen, mit einem Betonbett, das in seinem Querschnitt als doppelter Doppel-T-Träger ausgelegt ist. Allerdings hat sich gezeigt, dass sich das bekannte Betongestell durch die zeitabhängigen Schwindverformungen des Betons verzieht, sodass Maßungenauigkeiten entstehen, die bei der präzisen (Flächenschleif-)Bearbeitung von Werkstücken unerwünscht sind. An diesem Nachteil können auch die in der DE 37 34 895 A1 genannten, einbetonierten Stahlrahmenteile nichts ändern, zumal diese Stahlrahmenteile zu einer komplizierten Konstruktion des Betongestells führen.

Ferner offenbart die EP 0 194 173 A eine Bearbeitungsmaschine mit einen Fundament aus Beton.

### Darstellung der Erfindung

Es ist daher Aufgabe der vorliegenden Erfindung, ein Verfahren zum Herstellen einer Bearbeitungsmaschine bereitzustellen, die bei geringen Maßabweichungen eine einfache Konstruktion besitzt und kostengünstig herzustellen ist.

Diese Aufgabe wird erfindungsgemäß durch ein Verfahren nach Anspruch 1 gelöst. Besonders bevorzugte weiterbildungen der Erfindung sind in den abhängigen Ansprüchen angegeben. Der Erfindung liegt der Gedanke zugrunde, den zumindest abschnittsweise aus Beton hergestellten, tragenden Maschinenteil derart auszugestalten, dass Schwindverformungen weitgehend ausgeschaltet werden können, ohne dass hierdurch Zwangskräfte entstehen, die durch aufwändige Konstruktionen aufgefangen werden müssen. Vor diesem Hintergrund ist es erfindungsgemäß vorgesehen, dass bei einer gattungsgemäßen Bearbeitungsmaschine der Beton des tragenden Maschinenteils durch einen Beton gebildet ist, der einen Wasser-Bindemittelwert von höchstens 0,30 aufweist.

Auf diese Weise wird sichergestellt, dass beim Abbinden und Erhärten des Betons bereits innerhalb relativ kurzer Zeit annähernd die gesamte Wassermenge des Betons abgebunden wird, sodass das im Beton vorhandene Wasser als Hauptursache des Schwindens weitgehend beseitigt wird. Dies führt dazu, dass der Grundkörper der erfindungsgemäßen Flächenschleifvorrichtung in einem frühen Stadium nach der Herstellung des Grundkörpers nur noch sehr geringe Schwindverformungen aufweist, sodass sich keinerlei Verzugserscheinungen oder sonstige Maßabweichungen ergeben. Dabei ist zu beachten, dass für die Erzielung dieses Ergebnisses keinerlei zusätzliche Halte- oder Zwangsvorrichtungen wie Stahlrahmen oder dergleichen erforderlich sind.

Dabei hat sich gezeigt, dass die Schwindneigung des Betons nochmals überproportional reduziert werden kann, wenn gemäß einer Weiterbildung der Erfindung der Beton des tragenden Maschinenteils einen Wasser-Bindemittelwert von höchstens 0,25, bevorzugt höchstens 0,20 aufweist.

Um die oben genannten Vorteile zu erzielen, ist zusätzlich zu dem erfindungsgemäßen Wasser-Bindemittelwert vorgesehen, dass der Beton des tragenden Maschinenteils eine Biegezugfestigkeit von mindestens 15 MPa aufweist. Hierdurch ergeben sich völlig neue Gestaltungsmöglichkeiten für die tragenden Bauteile. So kann dank der erfindungsgemäßen Betonzusammensetzung gemäß einer Weiterbildung der Erfindung auch auf den Einsatz stabförmiger Bewehrungseinlagen wie Betonstahlstäben oder dergleichen verzichtet werden. Unter "stabförmigen Bewehrungseinlagen" werden dabei solche Bewehrungen verstanden, die einen anrechenbaren Beitrag zur statischen und/oder dynamischen Tragfähigkeit des Maschinenteils leisten. Sogenannte "konstruktive Bewehrung" oder Hilfsbewehrung für Transportzwecke, lokale Lasteinleitungen, etc. fällt nicht hierunter. Durch einen Verzicht auf Bewehrungseinlagen wird die Konstruktion des Grundkörpers weiter vereinfacht, und es ergibt sich eine extrem hohe Gestaltungsfreiheit für den Grundkörper.

Dies gilt insbesondere, wenn der Beton eine Biegezugfestigkeit von mindestens 20 MPa, bevorzugt mindestens 25 MPa aufweist. Um gleichzeitig eine hohe Festigkeit und Dauerhaftigkeit des tragenden Bauteils sicherzustellen, ist gemäß einer Weiterbildung der Erfindung vorgesehen, dass der Beton des tragenden Bauteils Fasern, insbesondere Metallfasern und/oder Kunststofffasern, aufweist. Dabei ist zu beachten, dass im Rahmen der vorliegenden Erfindung Fasern aus unterschiedlichsten Materialien zum Einsatz kommen können.

Dabei ist es besonders bevorzugt, dass der Beton des tragenden Bauteils eine Druckfestigkeit von mindestens 90 MPa, bevorzugt mindestens 120 MPa, besonders bevorzugt mindestens 150 MPa aufweist. Hierdurch eignet sich das tragende Maschinenteil auch für hochbeanspruchte Bearbeitungsvorgänge.

Das tragende Maschinenteil kann im Rahmen der vorliegenden Erfindung unterschiedlichste Maschinenteile einer gattungsgemäßen Bearbeitungsmaschine betreffen, wobei es sich in vielen Fällen auch um dynamisch beanspruchte Maschinenteile handeln kann. Dabei kann sich die Ausgestaltung des Maschinenteils aus Beton in manchen Anwendungsfällen auch für Verkleidungsteile o. dgl. anbieten. Gemäß einer Weiterbildung der Erfindung ist jedoch vorgesehen, dass das tragende Maschinenteil einen Maschinenteil bildet, der ausgewählt ist aus der Gruppe bestehend aus Maschinenbett, Träger, Ausleger, Portalträger, Konsole, Grundträger und Gehäuse. So haben die Erfinder festgestellt, dass die erfindungsgemäße Ausgestaltung dieser Maschinenteile aus einem speziellen Beton die oben genannten Vorteile besonders ausgeprägt ermöglicht, nämlich zu geringen Kosten Maschinenteile mit einfacher Konstruktion, geringen Maßabweichungen und hoher Dauerhaftigkeit bereit zu stellen.

Gemäß einer Weiterbildung des erfindungsgemäßen Verfahrens ist vorgesehen, dass die Wärmebehandlung derart ausgeführt wird, dass das Schwindmaß des Betons nach der Wärmebehandlung mindestens 90%, bevorzugt mindestens 95% des Endschwindmaßes nach DIN 1045-1 beträgt. Hierdurch wird ermöglicht, dass das Schwinden des Betons nach der Wärmebehandlung bereits so weitgehend abgeschlossen ist, dass sich nach dem Verbinden des tragenden Maschinenteils mit einer Bearbeitungseinheit nur noch vernachlässigbare Schwindverformungen einstellen. Hierdurch stößt der Werkstoff Beton in Regionen der Maßgenauigkeit vor, die bisher nur Metallträgern vorbehalten waren.

Um eine besonders wirkungsvolle und gleichzeitig schonende Wärmebehandlung des Betons zu erzielen, ist gemäß einer Weiterbildung der Erfindung vorgesehen, dass die Wärmbehandlung bei einer Temperatur im Bereich von 70°C bis 120°C, bevorzugt im Bereich von 80°C bis 100°C durchgeführt wird. Hierdurch ergibt sich eine besonders effektive Verbesserung des Schwindverhaltens, ohne eine unerwünschte Rissbildung oder Fehlstellenbildung in dem Beton zu induzieren.

Ferner hat es sich gemäß einer Weiterbildung der Erfindung als vorteilhaft erwiesen, die Wärmebehandlung für einen Zeitraum von mindestens 24 Stunden und bevorzugt höchstens 36 Stunden durchzuführen. Hierdurch ergibt sich nicht nur ein zügiger Herstellungsprozess, sondern auch eine schonende und wirksame Verbesserung des Schwindverhaltens sowie Erhöhung der Tragfähigkeit.

### Kurze Beschreibung der Zeichnungen

- Fig. 1: zeigt schematisch eine Perspektivansicht einer nach dem erfindungsgemäßen Verfahren hergestellten Bearbeitungsmaschine als erste bevorzugte Ausführungsform;
- Fig. 2: zeigt schematisch eine Perspektivansicht einer nach dem erfindungsgemäßen Verfahren hergestellten Bearbeitungsmaschine als zweite bevorzugte Ausführungsform.

### Ausführliche Beschreibung bevorzugter Ausführungsformen

Bevorzugte Ausführungsformen der Erfindung werden nachfolgend ausführlich unter Bezugnahme auf die begleitenden Zeichnungen beschrieben.

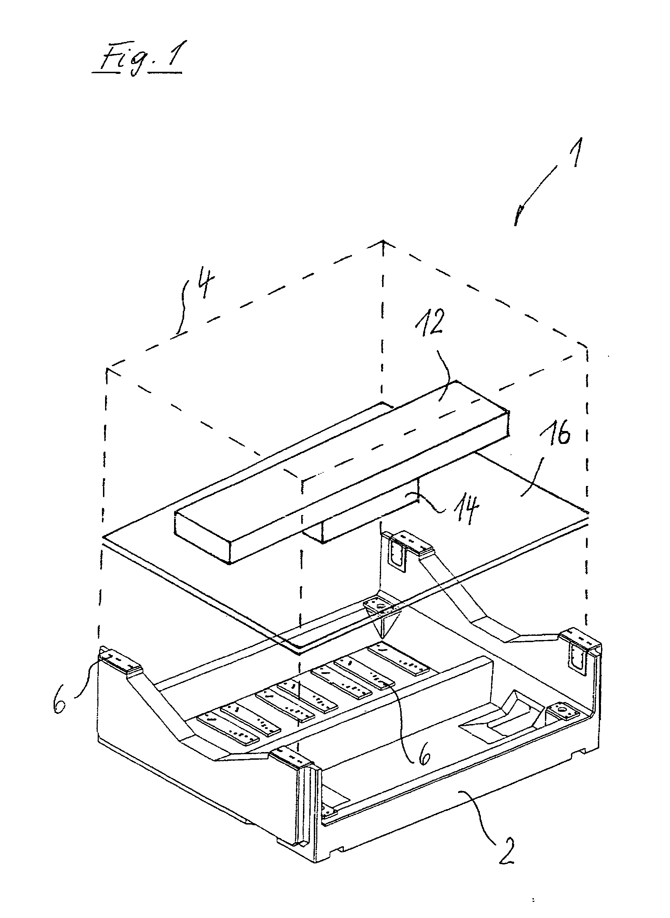

Eine erste Ausführungsform einer Bearbeitungsmaschine 1, die nach dem erfindungsgemäßen Verfahren hergestellt wurde ist in Fig. 1 schematisch in einer Perspektivansicht dargestellt. Bei der Bearbeitungsmaschine 1 handelt es sich in der vorliegenden Ausführungsform um eine Flächenschleifmaschine zum Bearbeiten von Werkstücken, die aus unterschiedlichsten Materialien wie beispielsweise Holz, Holzwerkstoffen, Kunststoff, Metall o. dgl. bestehen können. Zu diesem Zweck weist die Bearbeitungsmaschine 1 eine Bearbeitungseinheit 14 auf, die in Fig. 1 rein schematisch dargestellt ist. Bei der Bearbeitungseinheit 14 kann es sich beispielsweise um ein umlaufendes Endlos-Schleifmittel oder andere geeignete Schleifeinrichtungen handeln.

Ferner ist zu beachten, dass weder die Art der Bearbeitung noch die Art der zu bearbeitenden Werkstücke im Rahmen der vorliegenden Erfindung beschränkt sind. So kann es sich bei der Bearbeitungsmaschine beispielsweise auch um eine Bohr-oder Fräsmaschine, eine Kantenanleimmaschine, eine Laserbearbeitungsmaschine oder ein Bearbeitungszentrum, das diese und weitere Bearbeitungen kombiniert, handeln. Ferner kann es sich sowohl um eine Stationärmaschine, wie sie in Fig. 1 beispielhaft gezeigt ist, aber auch um eine Durchlaufmaschine handeln, bei welcher die Werkstücke auf einer geeigneten Fördereinrichtung in einer Durchlaufrichtung gefördert und im Zuge des Fördervorganges bearbeitet werden.

Unterhalb der Bearbeitungseinheit 14 ist in der vorliegenden Ausführungsform eine Werkstückaufnahme 16 angeordnet, die dazu ausgelegt ist, die zu bearbeitenden Werkstücke (nicht gezeigt) während der Bearbeitung zu halten bzw. zu fördern. So kann es sich in der vorliegenden Ausführungsform bei der Werkstückaufnahme 16 um ein Förderband handeln, das die Werkstücke unter der Bearbeitungseinheit 14 hindurch fördert.

Die Bearbeitungseinheit 14 ist in der vorliegenden Ausführungsform an einem Träger 12 angebracht, der somit als tragendes Maschinenteil für die Bearbeitungseinheit 14 dient. Der Träger 12 ist aus Beton hergestellt, dessen Eigenschaften unten stehend noch näher beschrieben werden.

Über ein gestrichelt dargestelltes Gehäuse 4 ist der Träger 12 mit einem Maschinenbett 2 verbunden, das in der vorliegenden Ausführungsform ebenfalls aus Beton hergestellt ist. Obgleich der Beton des Maschinenbetts 2 und des Trägers 12 unterschiedliche Eigenschaften aufweisen können, sind sie in der vorliegenden Ausführungsform prinzipiell mit gleichen Eigenschaften ausgeführt, die nachfolgend beschrieben werden.

Bei dem Beton handelt es sich um einen mineralisch gebundenen, insbesondere auch zementgebundenen Beton, d.h. beispielsweise nicht um einen sog. "Polymerbeton". Der Beton ist daher im Wesentlichen frei von polymeren Bindemitteln, obgleich der Beton auch verschiedene künstliche Zusatzstoffe aufweisen kann, beispielsweise um sein Fließverhalten beim Gießen zu verbessern.

Die erfindungsgemäße Besonderheit des Betons liegt darin, dass er einen niedrigen Wasser-Bindemittelwert von höchstens 0,30 und eine hohe Biegezugfestigkeit von mindestens 15 MPa aufweist. Dabei ist der Wasser-Bindemittelwert definiert als das Verhältnis zwischen der Masse des wirksamen Wassergehaltes (kg) und der Masse des anrechenbaren Bindemittelgehaltes (kg). Die Biegezugfestigkeit kann im Rahmen eines Vierpunktbiegeversuchs an prismatischen Probekörpern ermittelt werden, beispielsweise mittels des in den Richtlinien des Deutschen Betonvereins definierten Vierpunktbiegeversuchs.

Konkret weist der Beton in der vorliegenden Ausführungsform einen Wasserbindemittelwert von ca. 0,18 und eine Biegezugfestigkeit von ca. 30 MPa auf. Ein weiterer, wesentlicher Materialparameter des Betons ist seine Druckfestigkeit, die in der vorliegenden Ausführungsform mindestens 150 MPa beträgt, wobei die Druckfestigkeit des Betons als Bemessungswert der Druckfestigkeit nach DIN 1045-1 definiert ist.

Zur Erreichung dieser Festigkeitswerte trägt bei, dass der Beton in der vorliegenden Ausführungsform Fasern enthält, wie beispielsweise Metallfasern, Kunststofffasern oder andere geeignete Fasern. Hierdurch erhöhen sich jedoch nicht nur die Festigkeitswerte des Betons, sondern der Beton wird auch weniger rissanfällig, besitzt ein verbessertes Schwindverhalten und eine erhöhte Dauerhaftigkeit. Ferner trägt das Vorsehen von Fasern im Beton dazu bei, die Notwendigkeit stabförmiger Bewehrungseinlagen wie gerippten Betonstahlstäben in den tragenden Maschinenteilen zu vermindern, so dass je nach Anwendungsfall und Betoneigenschaften in vielen Fällen vollständig auf derartige Bewehrungseinlagen verzichtet werden kann. In diesen Fällen kann jedoch ggf. konstruktive Bewehrung vorhanden sein, beispielsweise um die tragenden Maschinenteile beim Transport zu schützen oder lokale Lasteinleitungsstellen vorzusehen.

Durch die herausragenden Eigenschaften des verwendeten Betons wird es im Rahmen der Erfindung möglich, unterschiedlichste tragende (und ggf. nicht tragende) Maschinenteile aus Beton herzustellen, wie beispielsweise das in Fig. 1 gezeigte Maschinenbett oder den in Fig. 1 gezeigten Träger, aber auch andere Bauteile wie Portalträger, Konsolen, Grundträger, Gehäuseteile o. dgl., auch wenn diese in den Figuren nicht gezeigt sind.

Die Herstellung und Verarbeitung des hier zur Rede stehenden Betons, insbesondere des Faserbetons, ist im Stand der Technik und somit dem Fachmann prinzipiell bekannt und entspricht prinzipiell der Vorgehensweise, wie sie im Bereich der Bautechnik zum Einsatz kommt. So kann die Herstellung des Faserbetons beispielsweise nach der Richtlinie des Deutschen Ausschusses für Stahlbeton mit dem Titel "Stahlfaserbeton" (21. Entwurf vom April 2005) erfolgen. Ebenso kann hinsichtlich der Herstellung und Verarbeitung des Betons auf die Veröffentlichung der Association Français de Genie Civile mit dem Titel "Interim Recommendations on Ultra-High Performance Fiber-Reinforced Concrete" (2002) zurückgegriffen werden.

Unter Berücksichtigung dieser bekannten Grundlagen vollzieht sich die Herstellung der in Fig. 1 gezeigten Bearbeitungsmaschine beispielsweise wie folgt. Zunächst wird ein Frischbeton hergestellt, der den oben beschriebenen Wasser-Bindemittelwert aufweist und von seiner Zusammensetzung dazu ausgelegt ist, im erhärteten Zustand eine Biegezugfestigkeit von 25 MPa zu besitzen. Anschließend wird der Beton in eine geeignete Schalung für das Maschinenbett 2 bzw. den Träger 12 gegossen und ggf. verdichtet.

Daraufhin wird der Beton in einer nicht gezeigten Einrichtung einer Wärmebehandlung unterworfen, indem er für ca. 24 bis 36 Stunden bei einer Temperatur im Bereich von 80°C bis 100°C gelagert wird. Im Zuge dieser Wärmebehandlung härtet der Beton zügig aus, wobei das im Frischbeton enthaltene Wasser fast vollständig mit den Bindemitteln abbindet oder teilweise auch verdunstet. Auf diese Weise ist das Schwinden des Betons nach der Wärmebehandlung bereits weitgehend abgeschlossen.

Anschließend kann das tragende Maschinenteil bereits aus der Schalung entnommen werden und zu einem gewünschten Zeitpunkt direkt oder indirekt mit weiteren Maschinenteilen sowie mindestens einer Bearbeitungseinheit 14 verbunden werden, um eine Bearbeitungsmaschine 1 zu bilden.

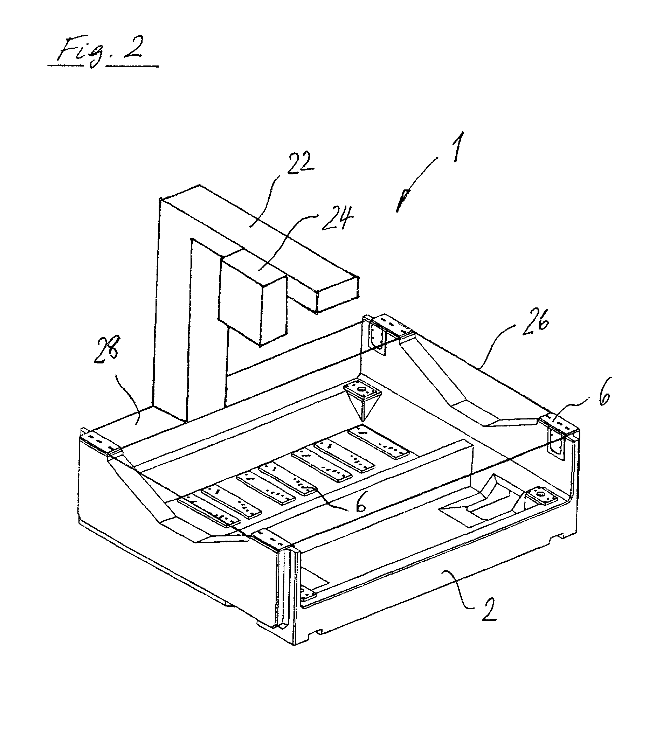

Eine weitere Bearbeitungsmaschine 1 gemäß einer zweiten bevorzugten Ausführungsform ist in Fig. 2 schematisch in einer Perspektivansicht dargestellt. Die in Fig. 2 gezeigte Ausführungsform unterscheidet sich von der ersten Ausführungsform zunächst dadurch, dass es sich nicht um eine Schleifmaschine, sondern um ein Bearbeitungszentrum handelt. So weist die in Fig. 2 gezeigte Bearbeitungsmaschine einen Bearbeitungstisch 26 auf, der auf dem Grundkörper 2 angeordnet ist, beispielsweise in der Form eines bekannten Konsolentisches, der ggf. auch aus bzw. mit Netonteilen hergestellt sein kann.

Ferner ist auf dem Grundkörper 2 eine Führung 28 angeordnet, auf der ein Auslegerarm 22 derart angeordnet ist, dass der Auslegerarm 22 entlang der Führung 28 verfahrbar ist. An dem Auslegerarm 22 ist eine Bearbeitungseinheit 24 angeordnet, und zwar derart, dass die Bearbeitungseinheit 24 entlang des Auslegerarms 22 verfahrbar ist. Bei der Bearbeitungseinheit kann es sich beispielsweise um eine Bearbeitungsspindel handeln, in die nach Bedarf verschiedene Bearbeitungswerkzeuge und Bearbeitungsaggregate eingewechselt werden können. Auf diese Weise können Werkstücke, die auf dem Bearbeitungstisch 26 angeordnet sind, mittels der Bearbeitungseinheit 24 auf unterschiedlichste Art und Weise bearbeitet werden.

In der vorliegenden Ausführungsform ist neben dem Maschinenbett 2 auch der Auslegerarm 22 aus Beton hergestellt, wobei der Beton die selben Eigenschaften besitzt wie in der oben beschriebenen ersten Ausführungsform. Auf diese Weise erhält man in beiden Ausführungsformen eine neuartige Bearbeitungsmaschine, die bei einfacher und kostengünstiger Herstellung geringe Maßabweichungen besitzt und Bearbeitungsvorgänge mit höchster Dynamik ermöglicht.

Im Hinblick auf die aus Beton hergestellten, tragenden Maschinenteile 2, 12 und 22 gemäß den obigen Ausführungsformen ist zu beachten, dass diese als einstückig hergestellte Betonteile dargestellt sind. Es ist jedoch zu beachten, dass die aus Beton hergestellten tragenden Maschinenteile ggf. auch mehrteilig ausgeführt sein können, und dass es sich hierbei auch um Hybridbauteile handeln kann, d.h. Bauteile bei denen der Betonkörper mit anderen Bauteilen wie Stahlträgern o. dgl. verbunden sind. Dabei können mehrere Betonteile und/oder andere Teile miteinander verklebt werden. Ebenso können die aus Beton hergestellten tragenden Maschinenteile verschiedene Befestigungs- und Verankerungspunkte aufweisen, die beispielsweise aus Stahl hergestellt und in den Beton eingegossen sind. Beispiele hierfür sind die in Fig. 1 und Fig. 2 gezeigten Verankerungsstellen 6, an denen beispielsweise das Gehäuse 4, der Maschinentisch 26 oder andere Bauteile angebracht werden können.

## Patentansprüche

1. Verfahren zum Herstellen einer Bearbeitungsmaschine (1) zum Bearbeiten von Werkstücken, die bevorzugt zumindest teilweise aus Holz, Holzwerkstoffen, Kunststoff, Metall oder dergleichen bestehen, mit: mindestens einem tragenden Maschinenteil (2, 12, 22) und mindestens einer mit dem tragenden Maschinenteil verbundenen Bearbeitungseinheit (14, 24), wobei das tragende Maschinenteil (2, 12, 22) zumindest abschnittsweise aus Beton besteht, mit den Schritten:
Herstellen des tragenden Maschinenteils (2, 12, 22) aus Beton, der einen Wasser-Bindemittelwert von höchstens 0,30, bevorzugt höchstens 0,25 aufweist,
Wärmebehandeln des Betons, und
Verbinden des tragenden Maschinenteils (2, 12, 22) mit der Bearbeitungseinheit (14, 24).

2. Verfahren nach Anspruch 1, **dadurch gekennzeichnet, dass** das Schwindmaß des Betons nach der Wärmebehandlung mindestens 90%, bevorzugt mindestens 95% des Endschwindmaßes nach DIN 1045-1 beträgt.

3. Verfahren nach Anspruch 1 oder 2, **dadurch gekennzeichnet, dass** die Wärmebehandlung bei einer Temperatur im Bereich von 70 bis 120° Celsius, bevorzugt im Bereich von 80 bis 100° Celsius durchgeführt wird.

4. Verfahren nach einem der Ansprüche 1 bis 3, **dadurch gekennzeichnet, dass** die Wärmebehandlung für einen Zeitraum von mindestens 24 Stunden und bevorzugt höchstens 36 Stunden durchgeführt wird.

## Claims

1. Method for producing a processing machine (1) for processing workpieces which preferably consist at least partly of wood, derived timber products, plastic, metal or the like, having:
at least one load-bearing machine part (2, 12, 22) and at least one processing unit (14, 24) joined to the load-bearing machine part, wherein the load-bearing machine part (2, 12, 22) consists at least in some sections of concrete,
having the steps:
producing the load-bearing machine part (2, 12, 22) from concrete which has a water-binder ratio of 0.30 at the most, preferably 0.25 at the most,
heat-treating the concrete, and
joining the load-bearing machine part (2, 12, 22) to the processing unit (14, 24).

2. Method according to claim 1, **characterised in that** the degree of shrinkage of the concrete after heat-treatment is at least 90%, preferably at least 95%, of the final degree of shrinkage according to DIN 1045-1.

3. Method according to claim 1 or 2, **characterised in that** the heat-treatment is carried out at a temperature in the range from 70 to 120° Celsius, preferably in the range from 80 to 100° Celsius.

4. Method according to one of claims 1 to 3, **characterised in that** the heat-treatment is carried out for a period of at least 24 hours and preferably 36 hours at the most.

## Revendications

1. Procédé de fabrication d'une machine d'usinage (1), pour l'usinage de pièces d'oeuvre, composées de préférence au moins partiellement de bois, de matériaux ligneux, de matière synthétique, de métal ou similaires, comprenant :
- au moins une partie de machine portante (2, 12, 22) et au moins une unité d'usinage (14, 24) reliée à la partie de machine portante, la partie de machine portante (2, 12, 22) étant au moins en partie en béton, présentant les étapes suivantes :
fabrication de la partie de machine portante (2, 12, 22) en béton, qui présente une valeur moyenne de liaison par eau de au maximum 0,30, de préférence au maximum 0,25,
traitement thermique du béton, et
liaison de la partie de machine portante (2, 12, 22) avec l'unité d'usinage (14, 24).

2. Procédé selon la revendication 1, **caractérisé en ce que** la cote de retrait du béton après le traitement thermique est d'au moins 90 %, de préférence d'au moins 95 % de la cote de retrait final selon DIN 1045-1.

3. Procédé selon la revendication 1 ou 2, **caractérisé en ce que** le traitement thermique est effectué à une température de l'ordre de 70 à 120° Celsius, de préférence dans la plage de 80 à 100° Celsius.

4. Procédé selon l'une des revendications 1 à 3, **caractérisé en ce que** le traitement thermique est effectué pour une période d'au moins 24 heures et de préférence au maximum 36 heures.
